# FASCICULE DE BREVET EUROPEEN

(11) **EP 2 094 435 B1**
(45) Date de publication et mention de la délivrance du brevet: **29.12.2010**
(21) Numéro de dépôt: 07870260.2
(22) Date de dépôt: 08.11.2007
(51) Int. Cl.: B23Q 1/00, B23Q 1/50, B23K 9/028, B23Q 1/52, B23Q 9/00

(54) **MACHINE ORBITALE D'USINAGE D'UNE PAROI METALLIQUE DE REVOLUTION**
KREISFÖRMIGE VORRICHTUNG ZUR MASCHINELLEN HERSTELLUNG EINER METALLISCHEN DREHSCHEIBE
ORBITAL APPARATUS FOR MACHINING A REVOLUTION METALLIC WALL

(30) Priorité: 09.11.2006 FR 0609791
(43) Date de publication de la demande: 02.09.2009
(73) Titulaire: Areva NP, 92400 Courbevoie (FR); Burch Maschinenbau AG, 9200 Gossau (CH)
(72) Inventeur: GUIGON, Jean-Paul, 71640 Givry (FR); BOIVIN, Didier, 71380 Chalon Sur Saone (FR); SCHUSTER, Rolf, 8311 Brutten (CH)
(74) Mandataire: Jacobson, Claude
(86) Numéro de dépôt international: PCT/FR2007/001846
(87) Numéro de publication internationale: WO 2008/068407

(56) Documents cités:
- DE-B- 1 300 833
- GB-A- 1 039 570
- GB-A- 1 113 412
- US-A- 3 009 048
- US-A- 3 194 936

## Description

La présente invention concerne une machine orbitale d'usinage d'une paroi métallique de révolution.

Dans de nombreuses applications industrielles, telles que le nucléaire, la pétrochimie, l'offshore, les gazoducs, oléoducs, les conduites forcées ou sous-marines il est nécessaire, après avoir soudé deux pièces métalliques ensembles et plus particulièrement lorsqu'il s'agit de pièces à paroi épaisse soudées avec un chanfrein étroit, d'effectuer un usinage de la surface de la soudure et plus particulièrement un meulage de cette surface pour obtenir une géométrie compatible avec des moyens de contrôle par ultrasons afin d'examiner la soudure.

En effet, lors d'un contrôle par ultrasons ou par gammagraphie, le capteur doit être maintenu en contact avec la surface de la soudure lors de son déplacement pour effectuer un contrôle correct, notamment lorsqu'il s'agit de contrôler une soudure de faible largeur et de grande profondeur avec une surface de soudure éventuellement inclinée par rapport à l'axe de la pièce à contrôler.

De tels contrôles par ultrasons sont effectués par exemple après le remplacement d'un générateur de vapeur usagé d'un réacteur nucléaire à eau sous pression.

En effet, les réacteurs nucléaires à eau sous pression comportent, à l'intérieur d'un bâtiment réacteur, une cuve renfermant le coeur du réacteur remplie d'eau sous pression ainsi qu'un circuit primaire constitué de plusieurs boucles en communication avec la cuve. Chacune des boucles du circuit primaire comporte un générateur de vapeur dans lequel l'eau sous pression se refroidit en échauffant et en vaporisant de l'eau alimentaire.

Les générateurs de vapeur de chacune des boucles sont reliés à la cuve par des canalisations d'arrivée et de sortie d'eau sous pression appelées conduites primaires. Ces conduites sont reliées à la boîte à eau du générateur de vapeur située à sa partie inférieure, par l'intermédiaire de coudes et de tubulures réalisés au moment du formage de la boîte à eau du générateur de vapeur. Les coudes de raccordement sont soudés par une première de leurs extrémités à l'extrémité de la conduite primaire et par leur seconde extrémité à la tubulure de raccordement de la boîte à eau du générateur de vapeur.

Après un certain temps de fonctionnement, les générateurs de vapeur qui renferment un faisceau de tubes d'échange thermique assurant la séparation entre l'eau primaire et l'eau d'alimentation, doivent être contrôlés et, si certains tubes du faisceau présentent des fuites, ces tubes doivent être fermés par un bouchon ou chemisés pour éviter la contamination de l'eau alimentaire.

Lorsque le générateur de vapeur a fonctionné pendant une longue durée, il peut donc s'avérer nécessaire de remplacer tout ou partie des tubes du faisceau.

Une telle opération de remplacement est complexe si bien qu'il a semblé préférable, dans certains cas, de réaliser le remplacement intégral des générateurs de vapeur des réacteurs nucléaires à eau sous pression. Cette opération de remplacement nécessite un découpage des canalisations primaires au voisinage des tubulures du raccordement du générateur de vapeur usagé et un soudage des tubulures du générateur de vapeur neuf de remplacement sur les canalisations primaires laissées en attente.

Le soudage bout à bout des tubulures des générateurs de vapeur sur les parties d'extrémité des canalisations primaires laissées en attente et réalisées en remplissant un chanfrein de forme annulaire ménagé entre l'extrémité de la tubulure et l'extrémité de la canalisation à raccorder, par un métal d'apport qui est compatible avec le métal de la tubulure et avec le métal de la canalisation primaire.

Le remplissage du chanfrein par le métal d'apport est généralement réalisé par un procédé de soudage qui est orbital.

Après le soudage, un usinage et plus particulièrement un meulage de la surface de la soudure est effectué avant de réaliser un contrôle par ultrasons de cette soudure.

Ce meulage est couramment effectué de manière manuelle ce qui implique la présence d'opérateurs durant une période longue d'autant plus contraignante pour ceux-ci qu'ils sont exposés à une forte irradiation due à la proximité du circuit primaire dans le cas du remplacement d'un générateur de vapeur.

Pour réduire la présence d'opérateurs, on connaît des machines de meulage automatiques dont le principal inconvénient réside dans le fait que l'outillage orbital actuel ne peut effectuer qu'un tour en raison de la présence des câbles d'alimentation électrique. L'opération est donc longue en raison du nombre d'arrêt et de retour en arrière de l'outillage et les risques de produire des creux sur la surface de la soudure sont importants à chaque arrêt et à chaque démarrage de l'outil de meulage rendant les opérations de contrôle par ultrasons aléatoires.

On connaît dans le document GB-A-1 113 412 une machine orbitale d'usinage comprenant :
- une platine annulaire fixe, montée coaxialement sur un support et comportant à sa périphérie un collecteur électrique annulaire,
- une platine annulaire mobile en rotation et montée coaxialement sur la platine annulaire fixe par l'intermédiaire d'organes de rotation, ladite platine annulaire mobile portant :
- un jeu de contacts électriques destinés à coopérer avec le collecteur électrique,
- des moyens d'actionnement en rotation de cette platine mobile, et
- des moyens de soudage.

L'invention a pour but d'éviter ces inconvénients en proposant une machine orbitale d'usinage qui permet de réaliser une opération d'usinage en continu sans retour en arrière ni changement de sens de rotation réduisant ainsi la durée totale de l'intervention donc la dose d'irradiation reçue par le personnel exposé et les risques de détérioration du profil de la surface de la soudure.

L'invention a donc pour objet une machine orbitale d'usinage d'une paroi métallique de révolution selon la revendication 1.

Selon d'autres caractéristiques de l'invention :
- chaque platine annulaire est formée de deux demi-anneaux reliés entre eux par au moins une bride de liaison,
- le collecteur électrique annulaire comporte au moins quatre pistes coaxiales, au moins trois pistes formant chacune une phase et une piste pour la rotation de la platine mobile,
- les pistes coaxiales sont disposées sur la paroi extérieure de la platine annulaire fixe,
- le jeu de contacts électriques est formé par un trolley comprenant deux paires d'au moins quatre contacts pour maintenir l'alimentation électrique sans coupures dans les zones de jonction des pistes du collecteur électrique entre les deux demi-anneaux de la platine annulaire fixe,
- le trolley est fixé sur le bord extérieur de la platine annulaire mobile,
- les moyens d'entraînement en rotation de la platine mobile comprennent une couronne dentée ménagée sur ladite platine mobile engrenant avec au moins un pignon entraîné en rotation par un moteur électrique par l'intermédiaire d'un renvoi d'angle, ledit au moins pignon, le moteur électrique et le renvoi d'angle étant portés par la platine annulaire fixe,
- la puissance du moteur électrique d'entraînement en rotation du galet moteur de la bande abrasive est asservie à la force d'appui de la bande abrasive sur la paroi métallique,
- l'organe de commande comprend au moins un vérin pneumatique relié aux moyens d'alimentation pneumatique,
- les moyens d'alimentation pneumatique comprennent au moins un réservoir d'air ou de gaz comprimé,
- la platine annulaire mobile porte des moyens de réception de signaux radios pour la commande à distance des moyens d'entraînement en rotation de la platine mobile et des moyens d'usinage, et
- les moyens d'usinage portent à proximité de la bande abrasive, un dispositif de récupération des particules métalliques.

D'autres caractéristiques et avantages de l'invention apparaîtront au cours de la description qui va suivre, donnée à titre d'exemple et faite en se référant aux dessins annexés, sur lesquels :
- la Fig. 1 est une vue en perspective éclatée d'un générateur de vapeur de réacteur nucléaire à eau sous pression en place dans une casemate du bâtiment du réacteur,
- la Fig. 2 est une vue en élévation et en coupe partielle par un plan axial de la machine d'usinage conforme à l'invention en position de travail pour l'usinage orbital d'une canalisation et d'une tubulure du générateur de vapeur du réacteur nucléaire,
- la Fig. 3 est une vue schématique en perspective d'un côté de la machine d'usinage orbitale, conforme à l'invention,
- la Fig. 4 est une vue schématique en perspective de l'autre côté de la machine orbitale d'usinage, conforme à l'invention,
- la Fig. 5 est une vue schématique en perspective de la platine annulaire fixe de la machine orbitale d'usinage, conforme à l'invention,
- la Fig. 6 est une vue schématique en élévation et en coupe partielle des moyens d'entraînement en rotation de la platine annulaire mobile de la machine orbitale d'usinage, conforme à l'invention,
- la Fig. 7 est une vue schématique en élévation des moyens d'usinage de la machine orbitale d'usinage, conforme à l'invention, et
- la Fig. 8 est une vue schématique de dessous de la Fig. 7.

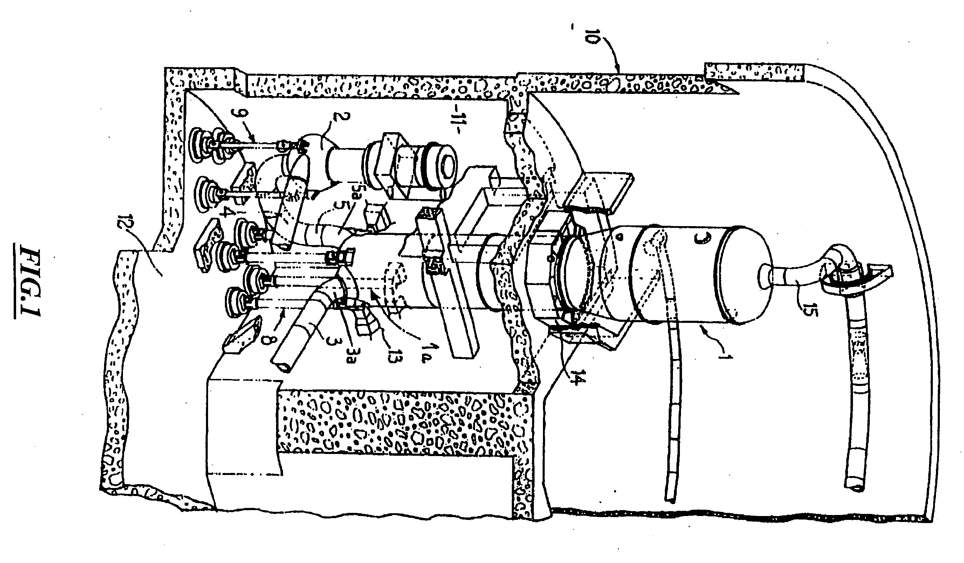

Sur la Fig. 1, on a représenté schématiquement une partie d'une boucle du circuit primaire d'un réacteur nucléaire à eau sous pression comportant un générateur de vapeur 1, une pompe primaire 2, une canalisation primaire 3 et 4 permettant de relier la cuve du réacteur au générateur de vapeur 1 et à la pompe primaire 2, respectivement, ainsi qu'une canalisation 5 permettant de relier le générateur de vapeur 1 à la pompe primaire 2. Le générateur de vapeur 1 et la pompe primaire 2 sont placés avec leurs axes verticaux et reposent sur des ensembles de béquilles support articulées 8 et 9, respectivement.

Sur cette figure, on a représenté une partie du bâtiment réacteur 10 qui renferme la cuve et l'ensemble primaire du réacteur.

A l'intérieur de ce bâtiment 10 est ménagé un local 11, ou casemate, destiné à recevoir le générateur de vapeur 1. Ce générateur de vapeur 1 repose sur le plancher 12 du local 11 par l'intermédiaire des béquilles support articulées 8 et le centrage et le positionnement de ce générateur de vapeur sont assurés au niveau des ceintures 13 et 14. L'enveloppe du générateur de vapeur est reliée à sa partie supérieure à une conduite 15 d'évacuation de vapeur.

Lorsqu'on réalise une opération de changement du générateur de vapeur 1 les canalisations primaires telles que 3 et 5 sont décuplées au voisinage de leur zone de jonction aux tubulures du générateur de vapeur. Un générateur de vapeur neuf de remplacement comportant les tubulures de raccordement est mis en place dans le local 11, de manière que ces tubulures de raccordement viennent en vis à vis des parties d'extrémité en attente des canalisations primaires telles que 3 et 5.

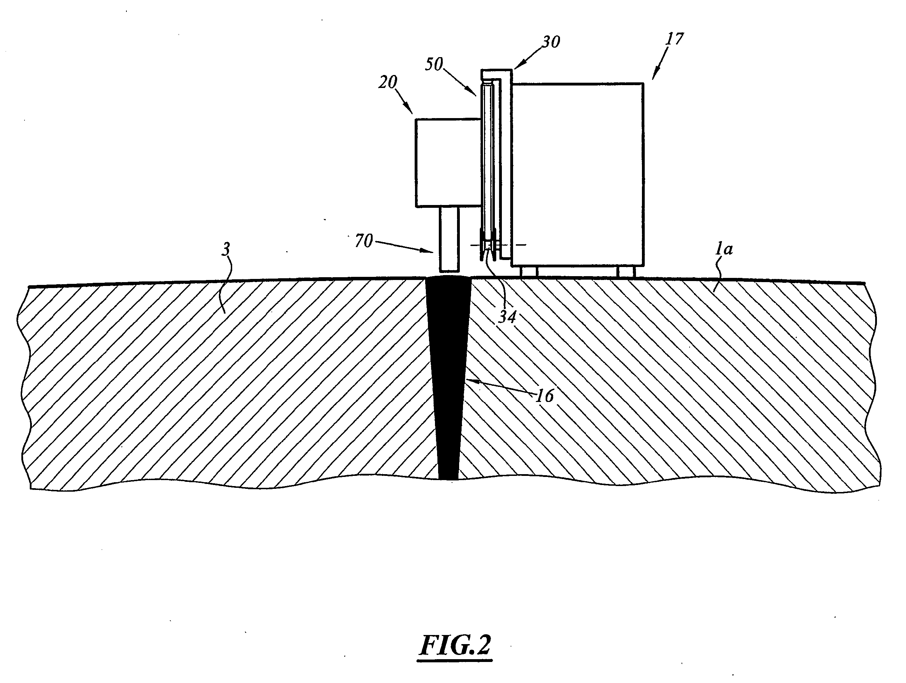

Ainsi que montré par exemple à la Fig. 2, les tubulures du générateur de vapeur neuf de remplacement et les extrémités des canalisations primaires sont usinées de manière qu'un chanfrein de soudage annulaire 16 de faible largeur et de grande profondeur soit ménagé entre chacune des parties d'extrémité correspondantes des tubulures et des canalisations primaires.

Sur cette figure 2, on a représenté, à titre d'exemple, une tubulure 1 a du générateur de vapeur neuf et une extrémité d'une canalisation primaire 3.

Le raccordement par soudage des tubulures et des canalisations primaires est réalisé en utilisant un dispositif de soudage TIG orbital, non représenté, dont la torche de soudage est mise en rotation autour de l'axe commun à la canalisation et à la tubulure de manière à balayer le fond du chanfrein annulaire.

Après le soudage, un usinage et plus particulièrement un meulage de la surface de la soudure 16 est effectué avant de réaliser un contrôle par ultrasons.

Dans la description qui suit, l'usinage effectué par la machine orbitale conforme à l'invention, est le meulage, d'autres usinages, comme par exemple le polissage, peuvent être effectués par cette machine.

Comme représenté à la Fig. 2, la machine orbitale d'usinage désignée dans son ensemble par la référence 20 est montée sur un support universel 17 de machine orbitale de type connu, fixé par des moyens appropriés, non représentés, autour de la paroi métallique de révolution et, dans le cas présent, sur la tubulure de raccordement 1a. Le support 17 est constitué par un anneau en plusieurs parties qui est engagé autour de la tubulure 1a dans une disposition coaxiale par rapport à cette tubulure.

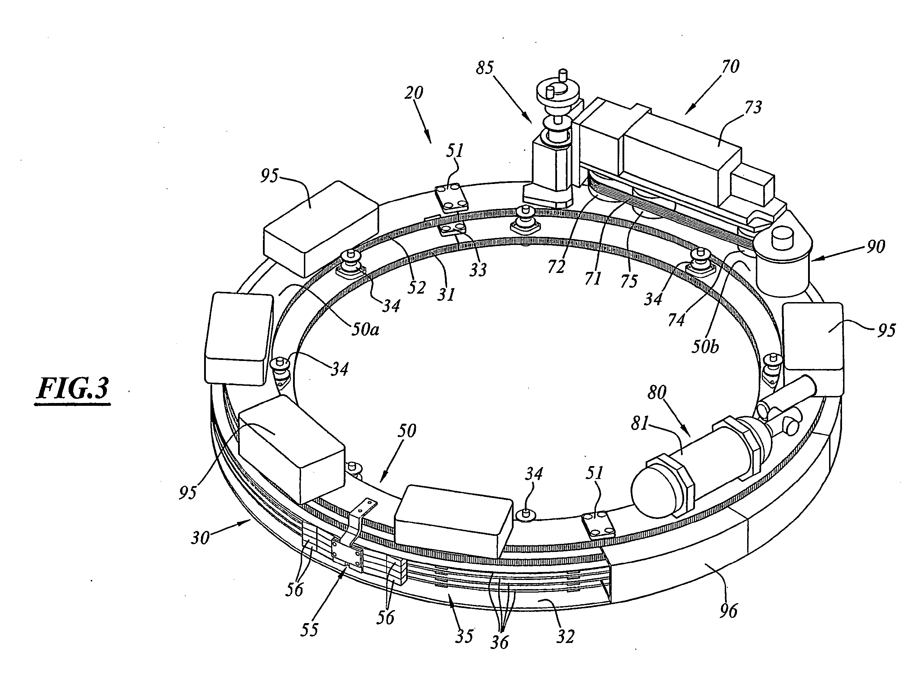

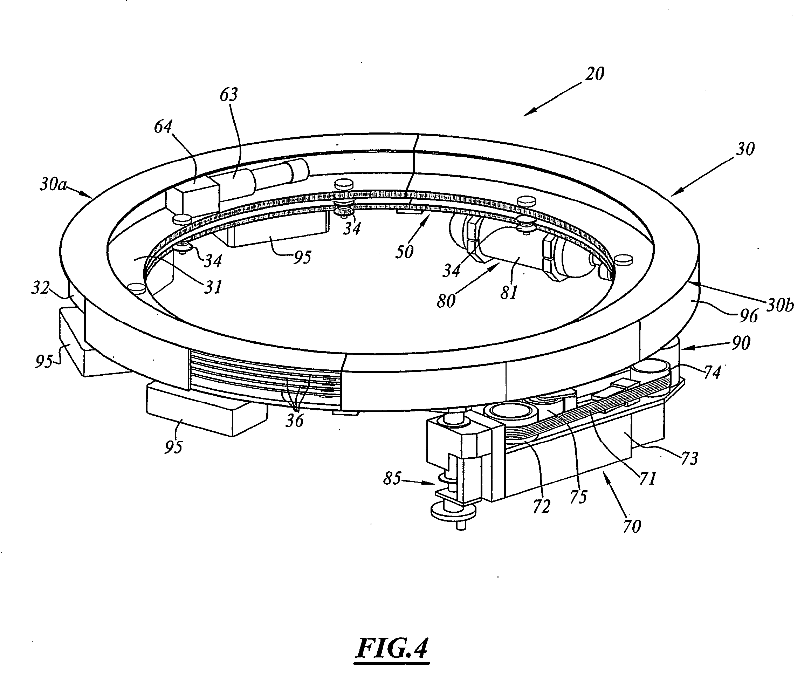

En se reportant maintenant aux Figs.3 et 4, on va décrire la machine d'usinage 20.

Cette machine d'usinage 20 se compose principalement en deux parties:
- une platine annulaire 30 fixe montée coaxialement sur le support 17, et
- une platine annulaire 50 mobile en rotation et montée coaxialement sur la platine annulaire 30 fixe.

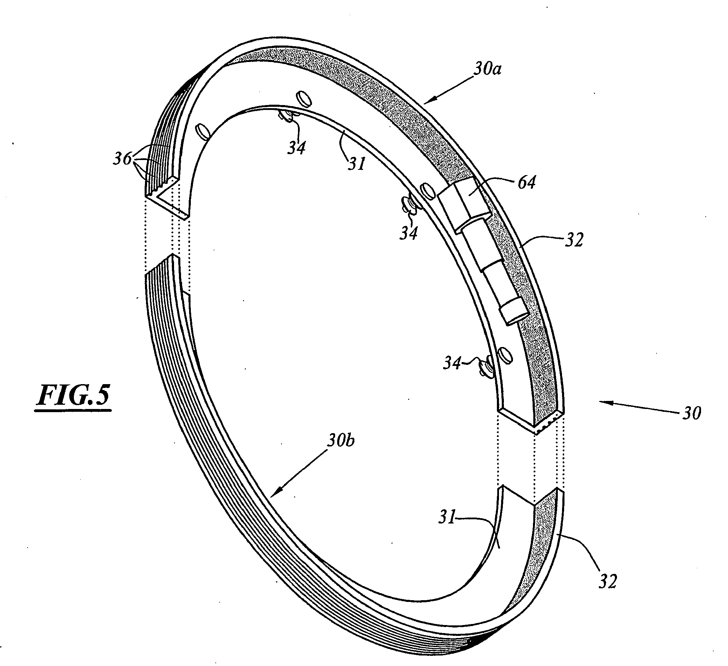

La platine annulaire 30 fixe est formée de deux demi-anneaux, respectivement 30a et 30b (Fig. 5), présentant chacun une section en forme de L comportant deux branches s'étendant perpendiculairement l'une par rapport à l'autre, respectivement 31 et 32. Les demi-anneaux 30a et 30b de la platine annulaire 30 fixe sont reliés entre eux au niveau de leurs zones de jonction par au moins une bride 33 (Fig. 3).

De même, la platine annulaire 50 mobile est formée de demi-anneaux, respectivement 50a et 50b, qui sont reliés entre eux au niveau de leurs zones de jonction par au moins une bride 51 (Fig. 3).

La platine annulaire 50 mobile est déplaçable en rotation par rapport à la platine annulaire 30 fixe par l'intermédiaire d'organes de roulement constitués par des galets à gorge 34 portés par la branche 31 de ladite platine annulaire 30. Ces galets à gorge 34 sont par exemple au nombre de huit uniformément répartis sur le pourtour de la platine annulaire 30. La platine annulaire 50 mobile est en appui sur les galets à gorge 34 et son bord intérieur 52 est biseauté afin de coopérer avec la gorge des galets 34.

Ainsi que montré sur les Figs. 3 à 5, la platine annulaire 30 fixe comporte, à sa périphérie, un collecteur électrique annulaire désigné par la référence générale 35. Ce collecteur électrique 35 est monté sur la paroi extérieure de la branche 32 de la platine annulaire 30 fixe et comporte au moins quatre pistes 36 concentriques, au moins trois pistes formant chacune une phase et une piste étant destinée à la rotation de la platine annulaire 50 mobile.

A cet effet, la platine annulaire 50 comporte un jeu de contacts électriques formé par un trolley 55 destiné à coopérer avec le collecteur électrique 35. Ce trolley 55 est fixé sur le bord extérieur de la platine annulaire 50 mobile et comprend deux paires d'au moins quatre contacts 56 permettant de maintenir l'alimentation électrique dans les zones de jonction des pistes 36 du collecteur électrique 35 entre les deux demi-anneaux 30a et 30b de la platine annulaire 30 fixe.

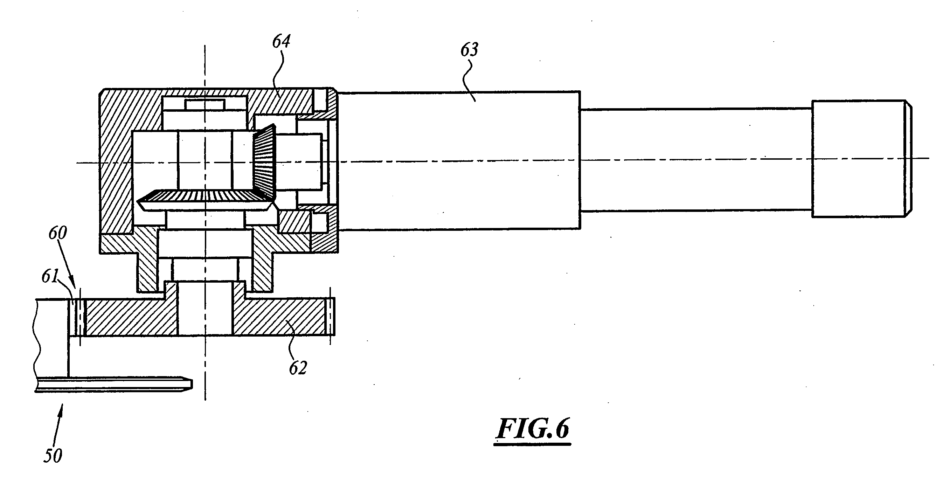

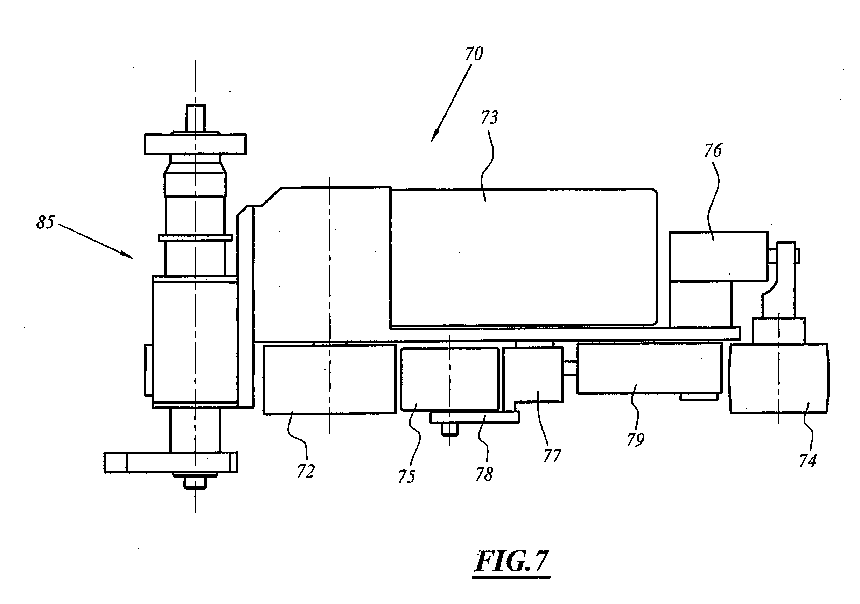

Par ailleurs, la platine annulaire 50 mobile porte:
- des moyens 60 d'actionnement en rotation de cette platine annulaire 50 mobile (Figs 4 et 6),
- des moyens 70 d'usinage de la paroi métallique (Figs. 3, 7 et 8),
- des moyens 80 d'alimentation pneumatique (Fig. 3) pour appliquer et maintenir les moyens 70 d'usinage sur la paroi métallique.

Ainsi que montré sur les Figs. 4 et 6, les moyens 60 d'entraînement en rotation de la platine mobile 50 comprennent une couronne dentée 61 (Fig. 6) ménagée sur la face interne de la platine mobile 50 et qui engrène avec au moins un pignon 62 entraîné en rotation par un moteur électrique 63 par l'intermédiaire d'un renvoi d'angle 64. L'ensemble constitué par le pignon 62, le moteur électrique 63 et le renvoi d'angle 64 est porté par la platine annulaire 30 fixe, comme représenté à la Fig. 4 et l'arbre d'entraînement du renvoi d'angle 64 traverse la branche 31 de la platine fixe 30 afin que le pignon 62 engrène avec la couronne dentée 61 ménagée sur la platine mobile 50. Le moteur 63 est alimenté électriquement par des câbles, non représentés, portés par la platine annulaire 30 fixe et qui sont reliés au trolley 55.

Comme montré sur les Figs. 3, 4, 7 et 8, les moyens 70 d'usinage comprennent, dans l'exemple représenté sur ces figures, une bande abrasive 71 montée sur trois galets, respectivement un galet moteur 72 entraîné en rotation par un moteur électrique 73, un galet tendeur 74 et un galet d'appui 75 de la bande abrasive 71 sur la paroi métallique à meuler. Le galet tendeur 74 est relié à un système à ressort 76 permettant de déplacer transversalement ce galet 74 afin de maintenir la bande abrasive 71 sous tension.

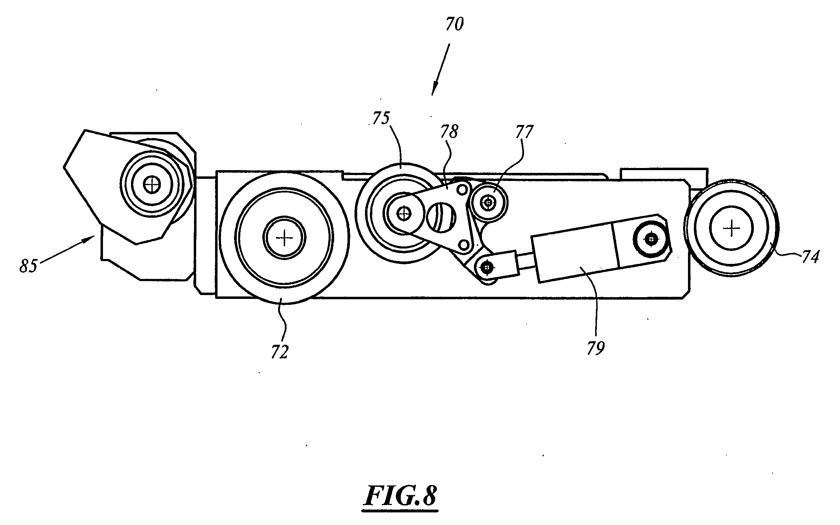

Le galet d'appui 75 est monté pivotant sur un axe 77 au moyen d'une biellette 78 (Fig. 8) qui est elle même reliée à un organe de commande 79 de façon à déplacer ledit galet d'appui 75 vers l'intérieur des platines 30 et 50, c'est à dire vers la paroi métallique à usiner.

L'organe de commande comprend au moins un vérin pneumatique 79 relié aux moyens 80 d'alimentation pneumatique par au moins un conduit de liaison, non représenté.

Les moyens 80 d'alimentation pneumatique comprennent de préférence au moins un réservoir 81 d'air ou de gaz comprimé dont la capacité est prévue pour un cycle de meulage de la surface d'une soudure et ce réservoir 81 peut être rechargé par un compresseur, non représenté.

Les moyens 70 d'usinage comprennent également un système 85 de réglage de la position de la bande abrasive 71 parallèlement à la paroi métallique de façon à pouvoir modifier la position de cette bande abrasive 71 sur la surface à meuler et ainsi couvrir toute la surface de la soudure à meuler. Ce système 85 est constitué par exemple par un système vis/écrou ou par tout autre système approprié de type connu et il peut être commandé manuellement ou à distance.

Comme représenté à la Fig. 3, les moyens d'usinage 70 portent à proximité de la bande abrasive 71, un dispositif de récupération 90 par exemple par aspiration, des particules métalliques qui peuvent se détacher de la bande abrasive 71 lors du meulage.

Enfin, la platine annulaire 50 mobile porte des coffrets 95 dans lesquels sont placés, par exemple, des moyens de réception de signaux radios pour la commande à distance des moyens 60 d'entraînement en rotation de la platine mobile 50 et des moyens 70 d'usinage. Ces coffrets 95 renferment en général l'ensemble des éléments de commande et/ou de régulation.

Les pistes 36 du collecteur électrique annulaire 35 sont protégées par un carter 96, comme montrées sur les Figs. 3 et 4.

L'usinage de la paroi métallique, c'est à dire de la surface externe du cordon de soudure 16 au moyen de la machine d'usinage 20, est réalisé de la façon suivante.

Tout d'abord, le support universel 17 est fixé sur la tubulure 1a et les deux demi-anneaux 30a et 30b de la platine annulaire 30 fixe sont montés sur le support universel 17. Ces deux demi-anneaux 30a et 30b sont reliés ensembles par les brides 33.

Ensuite, la platine annulaire 50 mobile est montée sur la platine annulaire 30 fixe en plaçant le bord interne 52 biseauté de chaque anneau 50a et 50b de ladite platine 50 sur les galets à gorge 34. Ces deux demi-anneaux 50a et 50b sont assemblés entre eux par les brides 51 et un opérateur effectue le réglage de la coaxialité de ladite platine annulaire 30 fixe par rapport à ladite platine annulaire 50 mobile.

Les contacts 56 du trolley 55 sont placés sur les pistes 36 du collecteur annulaire électrique 35. L'opérateur, par télécommande, actionne le moteur électrique 63 qui, par l'intermédiaire de la boîte de renvoi 64, entraîne en rotation le pignon 62. Ce pignon 62 engrenant avec la couronne dentée 61 de la platine annulaire 50 mobile, entraîne en rotation ladite platine annulaire 50 qui tourne sur les galets à gorge 34.

Toujours par télécommande, l'opérateur actionne le moteur électrique 73 des moyens 70 d'usinage de façon à entraîner en rotation la bande abrasive 71 par le galet moteur 72. Par déplacement du galet d'appui 75 au moyen du vérin pneumatique 79 actionné par l'air ou le gaz comprimé du réservoir 81, la bande abrasive 71 est mise en contact de la surface externe de la soudure 16 avec une pression déterminée. Sous l'effet de la rotation de la platine 50 mobile, cette bande abrasive 71 tourne autour de la paroi métallique et du fait de sa rotation sur les galets 72, 74 et 75, elle effectue un meulage de la surface extérieure de la soudure 16. La puissance du moteur électrique 73 d'entraînement en rotation du galet moteur 72 de la bande abrasive 71 est asservie à la force d'appui de cette bande abrasive 71 sur la surface externe de la soudure 16.

La télécommande permet également un arrêt d'urgence.

Les moyens 70 d'usinage portés par la platine annulaire 50 mobile peuvent donc du fait de l'absence de câbles de liaison avec l'environnement, effectuer plusieurs tours dans un sens ou dans l'autre. La position de la bande abrasive 71 parallèlement à la surface de la soudure 16 peut être modifiée par le système de réglage 85 entre un ou plusieurs tours.

Lorsque le meulage de toute la surface externe de la soudure a été effectué, la bande abrasive 71 est écartée de la paroi métallique par retrait du galet d' appui 75 et la rotation de cette bande abrasive 71 est arrêtée par coupure de l'alimentation du moteur électrique 73.

Ensuite, la rotation de la platine annulaire 50 mobile est également arrêtée par coupure de l'alimentation du moteur électrique 63.

A titre d'exemple, la largeur de la bande abrasive 71 est d'environ 60mm et la largeur de la soudure 16 en surface est sensiblement de 60mm. La puissance du moteur électrique 73 des moyens 70 d'usinage est d'environ 3KW et l'épaisseur de la soudure à usiner notamment par meulage est en moyenne de 4mm.

La commande à distance permet en particulier la mise en contact de la bande abrasive 71 sur la paroi métallique à usiner, de choisir le sens de rotation de la machine orbitale et/ou de régler la force d'appui de la bande abrasive 71 sur la paroi métallique.

La machine d'usinage orbitale selon l'invention permet donc d'effectuer une opération d'usinage en continu sans retour en arrière, ni changement de sens de rotation, ce qui permet de réduire la durée totale de l'intervention et les risques de détérioration du profil de la surface de la soudure et par conséquent d'assurer la fiabilité du contrôle par ultrasons. Elle permet également un gain de temps de 30 à 40% par rapport aux machines utilisées jusqu'à présent et de réduire de manière importante la présence d'opérateurs dans des zones fortement irradiées.

## Revendications

1. Machine orbitale d'usinage d'une paroi métallique de révolution, adaptable sur un support (17) universel de machine orbitale fixé autour de la paroi métallique de révolution, ladite machine comprenant :
- une platine annulaire (30) fixe, montée coaxialement sur le support (17) et comportant à sa périphérie un collecteur électrique (35) annulaire,
- une platine annulaire (50) mobile en rotation et montée coaxialement sur la platine annulaire (30) fixe par l'intermédiaire d'organes de roulement (34), ladite platine annulaire (50) mobile portant :
- un jeu (55) de contacts électriques destinés à coopérer avec le collecteur électrique (35),
- des moyens (60) d'actionnement en rotation de cette platine mobile (50),
- des moyens (70) d'usinage de la paroi métallique,
**caractérisée en ce que** la machine comprend des moyens (80) d'alimentation pneumatique pour appliquer et maintenir les moyens (70) d'usinage sur la paroi métallique, et les moyens (70) d'usinage comprennent une bande abrasive (71) montée sur trois galets (72, 74, 75), un galet moteur (72) entraîné en rotation par un moteur électrique (73) et destiné à entraîner la bande abrasive (71), un galet tendeur (74) de cette bande (71) et un galet d'appui (75) de ladite bande (71) sur la paroi métallique, ledit galet d'appui (75) étant déplaçable par un organe de commande (79) vers l'intérieur desdites platines (30 ; 50).

2. Machine selon la revendication 1, **caractérisée en ce que** chaque platine annulaire (30 ; 50) est formée de deux demi-anneaux (30a, 30b; 50a, 50b) reliés entre eux par au moins une bride de liaison (33 ; 51).

3. Machine selon la revendication 1 ou 2, **caractérisée en ce que** le collecteur électrique (35) annulaire comporte au moins quatre pistes (36) coaxiales, au moins trois pistes (36) formant chacune une phase et une piste (36) pour la rotation de la platine mobile (50).

4. Machine selon la revendication 3, **caractérisée en ce que** les pistes coaxiales (36) sont disposées sur le bord extérieur de la platine annulaire (30) fixe.

5. Machine selon l'une quelconque des revendications 1 à 4, **caractérisée en ce que** le jeu de contacts électriques est formé par un trolley (55) comprenant deux paires d'au moins quatre contacts (56) pour maintenir l'alimentation électrique sans coupure dans les zones de jonction des pistes (36) du collecteur électrique (35) entre les deux demi-anneaux (30a, 30b) de la platine annulaire (30) fixe.

6. Machine selon la revendication 5, **caractérisée en ce que** le trolley (55) est fixé sur le bord extérieur de la platine annulaire (50) mobile.

7. Machine selon l'une quelconque des revendications 1 à 6, **caractérisée en ce que** les moyens (60) d'entraînement en rotation de la platine mobile (50) comprennent une couronne dentée (61) ménagée sur ladite platine mobile (50) engrenant avec au moins un pignon (62) entraîné en rotation par un moteur électrique (63) par l'intermédiaire d'un renvoi d'angle (64), ledit au moins pignon (62), le moteur électrique (63) et le renvoi d'angle (64) étant portés par la platine annulaire (30) fixe.

8. Machine selon l'une quelconque des revendication 1 à 7, **caractérisée en ce que** la puissance du moteur électrique (73) d'entraînement en rotation du galet moteur (72) de la bande abrasive (71) est asservie à la force d'appui de cette bande abrasive (71) sur la paroi métallique.

9. Machine selon l'une quelconque des revendications 1 à 8, **caractérisée en ce que** l'organe de commande comprend au moins un vérin pneumatique (79) relié aux moyens (80) d'alimentation pneumatique.

10. Machine selon l'une quelconque des revendications 1 à 9, **caractérisée en ce que** les moyens (80) d'alimentation pneumatique comprennent au moins un réservoir (81) d'air ou de gaz comprimé.

11. Machine selon l'une quelconque des revendications 1 à 10,, **caractérisée en ce que** la platine annulaire (50) mobile porte des moyens de réception de signaux radios pour la commande à distance des moyens d'entraînement en rotation de la platine mobile (50) et des moyens (70) d'usinage.

12. Machine selon l'une quelconque des revendications 1 à 11, **caractérisée en ce que** les moyens (70) d'usinage portent, à proximité de la bande abrasive (71), un dispositif (90) de récupération des particules métalliques.

## Claims

1. Orbital machine for processing a metal wall generated by revolution, which machine can be fitted to a universal orbital machine support (17) which is fixed around the metal wall generated by revolution, the machine comprising:
- a fixed annular plate (30) which is mounted coaxially on the support (17) and which comprises, at the periphery thereof, an annular electrical collector (35),
- an annular plate (50) which can be moved in rotation and which is mounted coaxially on the fixed annular plate (30) by means of moving members (34), the movable annular plate (50) carrying:
- a set (55) of electrical contacts which are intended to cooperate with the electrical collector (35),
- means (60) for rotatably actuating this movable plate (50),
- means (70) for processing the metal wall,
**characterised in that** the machine comprises pneumatic supply means (80) for pressing and retaining the processing means (70) on the metal wall, and **in that** the processing means (70) comprise an abrasive strip (71) which is mounted on three rollers (72, 74, 75), a motorised roller (72) which is driven in rotation by an electric motor (73) and which is intended to drive the abrasive strip (71), a roller (74) for tensioning this strip (71) and a roller (75) for pressing the strip (71) on the metal wall, the pressing roller (75) being able to be moved by a control member (79) towards the inner side of the plates (30; 50).

2. Machine according to claim 1, **characterised in that** each annular plate (30; 50) is formed by two half-rings (30a, 30b; 50a, 50b) which are connected to each other by at least one connection flange (33; 51).

3. Machine according to claim 1 or claim 2, **characterised in that** the annular electrical collector (35) comprises at least four coaxial tracks (36), at least three tracks (36) each forming a phase and a track (36) for rotation of the movable plate (50).

4. Machine according to claim 3, **characterised in that** the coaxial tracks (36) are arranged on the outer edge of the fixed annular plate (30).

5. Machine according to any one of claims 1 to 4, **characterised in that** the set of electrical contacts is formed by a trolley (55) which comprises two pairs of at least four contacts (56) for maintaining the electrical power supply without interruptions in the junction zones of the tracks (36) of the electrical collector (35) between the two half-rings (30a, 30b) of the fixed annular plate (30).

6. Machine according to claim 5, **characterised in that** the trolley (55) is fixed to the outer edge of the movable annular plate (50).

7. Machine according to any one of claims 1 to 6, **characterised in that** the means (60) for rotatably driving the movable plate (50) comprise a toothed crown (61) which is provided on the movable plate (50) and which engages with at least one pinion (62) which is rotatably driven by an electric motor (63) by means of a bevel gear (64), the at least one pinion (62), the electric motor (63) and the bevel gear (64) being carried by the fixed annular plate (30).

8. Machine according to any one of claims 1 to 7, **characterised in that** the power of the electric motor (73) for rotatably driving the motorised roller (72) of the abrasive strip (71) is controlled by the pressing force of this abrasive strip (71) on the metal wall.

9. Machine according to any one of claims 1 to 8, **characterised in that** the control member comprises at least one pneumatic jack (79) which is connected to the pneumatic supply means (80).

10. Machine according to any one of claims 1 to 9, **characterised in that** the pneumatic supply means (80) comprise at least one reservoir (81) of air or compressed gas.

11. Machine according to any one of claims 1 to 10, **characterised in that** the movable annular plate (50) carries means for receiving radio signals for remotely controlling the means for rotatably driving the movable plate (50) and the processing means (70).

12. Machine according to any one of claims 1 to 11, **characterised in that** the processing means (70) carry, close to the abrasive strip (71), a device (90) for recovering metal particles.

## Patentansprüche

1. Orbitalmaschine zur Bearbeitung einer metallischen Rotationskörperwand, die an einen Orbitalmaschinen-Universalhalter (17) anpassbar ist, der um die metallische Rotationskörperwand herum befestigt ist, wobei die Maschine umfasst:
- eine feststehende ringförmige Platine (30), die an dem Halter (17) koaxial befestigt ist und an ihrem Umfang einen ringförmigen Stromkollektor (35) umfasst,
- eine drehbewegliche ringförmige Platine (50), die auf der feststehenden ringförmigen Platine (30) über Rollorgane (34) koaxial montiert ist, wobei die ringförmige Platine (50) trägt:
- einen Satz (55) von elektrischen Kontakten, die dazu bestimmt sind, mit dem elektrischen Kollektor (35) zusammenzuwirken,
- Mittel (60) für den Drehantrieb dieser beweglichen Platine (50),
- Mittel (70) zur Bearbeitung der Metallwand,
**dadurch gekennzeichnet, dass** die Maschine Mittel (80) zur pneumatischen Versorgung umfasst, um die Bearbeitungsmittel (70) an die Metallwand anzulegen und an dieser zu halten, und dass die Bearbeitungsmittel (70) ein Schleifband (71) umfassen, das auf drei Rollen (72, 74, 75) montiert ist, einer Antriebsrolle (72), die durch einen Elektromotor (73) in Drehung versetzt wird und dazu bestimmt ist, das Schleifband (71) anzutreiben, einer Rolle (74) zum Spannen des Bands (71) und einer Rolle (75) zum Andrücken des Bands (71) an die Metallwand, wobei die Andrückrolle (75) durch ein Betätigungsorgan (79) auf das Innere dieser Platinen (30; 50) zu bewegbar ist.

2. Maschine nach Anspruch 1, **dadurch gekennzeichnet, dass** jede ringförmige Platine (30; 50) von zwei Ringhälften (30a, 30b; 50a, 50b) gebildet ist, die durch mindestens eine Verbindungslasche (33; 51) miteinander verbunden sind.

3. Maschine nach Anspruch 1 oder 2, **dadurch gekennzeichnet, dass** der ringförmige Stromkollektor (35) mindestens vier koaxiale Bahnen (36) umfasst, wobei mindestens drei Bahnen (36) jeweils eine Phase bilden, und eine Bahn (36) für die Drehung der beweglichen Platine (50).

4. Maschine nach Ansspruch 3, **dadurch gekennzeichnet, dass** die koaxialen Bahnen (36) am Außenrand der feststehenden ringförmigen Platine (30) angeordnet sind.

5. Maschine nach einem der Ansprüche 1 bis 4, **dadurch gekennzeichnet, dass** der Satz von elektrischen Kontakten von einem Stromabnehmer (55) gebildet ist, der zwei Paare von mindestens vier Kontakten (56) umfasst, um die Stromversorgung ohne Unterbrechung in den Verbindungszonen der Bahnen (36) des Stromkollektors (35) zwischen den beiden Ringhälften (30a, 30b) der feststehenden ringförmigen Platine (30) aufrecht zu erhalten.

6. Maschine nach Anspruch 5, **dadurch gekennzeichnet, dass** der Stromabnehmer (55) am Außenrand der beweglichen ringförmigen Platine (50) befestigt ist.

7. Maschine nach einem der Ansprüche 1 bis 6, **dadurch gekennzeichnet, dass** die Mittel (60) zum Drehantrieb der beweglichen Platine (50) einen auf der beweglichen Platine (50) vorgesehenen Zahnkranz (61) umfassen, der mit mindestens einem Zahnrad (62) kämmt, das durch einen Elektromotor (63) über ein Winkelgetriebe (64) in Drehung versetzt wird, wobei das mindestens eine Zahnrad (62), der Elektromotor (63) und das Winkelgetriebe (64) von der feststehenden ringförmigen Platine (30) getragen werden.

8. Maschine nach einem der Ansprüche 1 bis 7, **dadurch gekennzeichnet, dass** die Leistung des Elektromotors (73) zum Drehantrieb der Rolle (72) zum Antrieb des Schleifbands (71) der Andruckkraft dieses Schleifbands (71) an die Metallwand nachgeführt wird.

9. Maschine nach einem der Ansprüche 1 bis 8, **dadurch gekennzeichnet, dass** das Antriebsorgan mindestens einen Pneumatikzylinder (79) umfasst, der mit den Mitteln (80) zur pneumatischen Versorgung verbunden ist.

10. Maschine nach einem der Ansprüche 1 bis 9, **dadurch gekennzeichnet, dass** die Mittel (80) zur pneumatischen Versorgung mindestens einen Luft- oder Druckgasbehälter (81) umfassen.

11. Maschine nach einem der Ansprüche 1 bis 10, **dadurch gekennzeichnet, dass** die bewegliche ringförmige Platine (50) Mittel zum Empfang von Funksignalen für die Fernsteuerung der Mittel zum Drehantrieb der beweglichen Platine (50) und der Bearbeitungsmittel (70) trägt.

12. Maschine nach einem der Ansprüche 1 bis 11, **dadurch gekennzeichnet, dass** die Bearbeitungsmittel (70) in Nähe des Schleifbands (71) eine Vorrichtung (90) zur Rückgewinnung der Metallteilchen tragen.
